# EUROPEAN PATENT APPLICATION

(11) **EP 2 106 104 A2**
(43) Date of publication of application: **30.09.2009**
(21) Application number: 08020529.7
(22) Date of filing: 26.11.2008
(51) Int. Cl.: H04M 1/2745, H04M 1/725

(54) **Mobile apparatus**

(30) Priority: 25.03.2008 JP 2008078806
(71) Applicant: Kabushiki Kaisha Toshiba, Minato-ku Tokyo (JP)
(72) Inventor: Sugimoto, Shigemitsu, Tokyo (JP)
(74) Representative: HOFFMANN EITLE

(57) **Abstract**

According to one aspect of the invention, there is provided a mobile apparatus including: a mail storage unit configured to store a history of email communications; an address storage unit configured to store a first email address associated with a certain name and a second email address associated with the certain name and an additional identifier ; and a display unit configured to display the certain name in a first manner to represent the first email address in the history; wherein the display unit is configured to display the certain name in a second manner to represent the second email address in the history.

## Description

The entire disclosure of Japanese Patent Application No. 2008-078806 filed onMarch 25, 2008, including specification, claims, drawings and abstract is incorporated herein by reference in its entirety.

### BACKGROUND

### Field of the Invention

One aspect of the present invention relates to a mobile apparatus capable of displaying a name corresponding to a mail address as mail information when the mail address has been deleted from an address book.

### Description of the Related Art

Recently, while telecommunication terminals such as mobile phones are coming into wide use, infrastructure for performing communication using the communication terminals is consolidated and thus communication using the telecommunication terminals has been widely performed. A common mobile phone, which previously stores an address book including phone numbers or mail addresses indicating a communicating party, displays communication history such as sent and receivedmails on a basis of this information. However, when data stored in the address book is rewritten by changing mail addresses or the like, the communication history based on a content of the address book cannot be displayed.

There has been proposed a more user friendly communication terminal device by making information of communication history accurate (see JP-A-2002-171332, for instance). In the communication terminal device, when a transmission/reception history of a mail or a phone call relating to a communicating party registered in a telephone directory data storage area is prepared, a flag showing an existence of the history corresponding to such telephone directory data is stored in the telephone directory data storage area respectively corresponding to the telephone directory data of the communicating party. When a name of the telephone directory data in the telephone directory data storage area is changed, whether there is a name needed to be changed in the history is determined and the name included in a correspondent history is updated to the changed name.

In JP-A-2002-171332, when phone numbers or mail addresses stored in the address book are updated, the communication history or the like is reviewed to rewrite them into new information. When an old phone number or a mail address is deleted from the address book, the name included in such a communication history may be deleted.

When a communicating party changes a mail address, the user updates the address book of the mobile phone. When the address book is updated to a new mail address, the old mail address is usually deleted from the address book. Accordingly, the mail address itself, instead of the name included in the address book, is displayed when the user views past transmission/reception mails. In this case, the user may not distinguish who is the transmission/reception mail received from or who is the transmission/reception mail transmitted to. Further, when the user views the address book including both the new mail address and the old mail address, the user may not distinguish which address is usable new mail address.

### SUMMARY

One of objects of the invention is to provide a mobile apparatus capable of distinguishing a transmission source or a transmission destination of the past transmission/reception mails, even when phone numbers or mail addresses are changed in the address book.

According to a first aspect of the invention, there is provided a mobile apparatus including: a mail storage unit configured to store a history of email communications; an address storage unit configured to store a first email address associated with a certain name and a second email address associated with the certain name and an additional identifier ; and a display unit configured to display the certain name in a first manner to represent the first email address in the history; wherein the display unit is configured to display the certain name in a second manner to represent the second email address in the history.

The mobile apparatus may include an input unit configured to receive an input of a given email address associated with a given name; wherein the address storage unit is configured to generate and store a character string by adding the additional identifier to the second email address when the input unit receives the first email address and the second email address is previously stored in the address storage unit.

According to a second aspect of the invention, there is provided a mobile apparatus including: an address storage unit configured to store a first party information associated with a certain name; and a display unit configured to display the first party information in a first manner; wherein the address storage unit is configured to generate and store a second party information by adding an additional identifier to the first party information; and the display unit is configured to display the first party information in a second manner when the address storage unit stores the second party information.

Preferably, the first party information includes a phone number.

Preferably, the first party information includes an email address.

The mobile apparatus may include an input unit configured to receive an input of a given party information associated with a given name; wherein the address storage unit is configured to generate and store the second party information by adding the additional identifier to the first party information when the input unit receives another party information associated with the certain name and the first party information associated with the certain name is previously stored in the address storage unit.

According to a third aspect of the invention, there is provided a mobile apparatus including: a mail storage unit configured to store a history of email communications; a first address storage unit configured to store a first email address and a first corresponding name; a second address storage unit configured to store a second email address and a second corresponding name; and a display unit configured to display the first corresponding name in a first manner to represent an email address included in the history when the email address corresponds to the first email address; wherein the display unit is configured to display the second corresponding name in a second manner to represent the email address when the email address corresponds to the second email address.

The mobile apparatus may further include an input unit configured to receive an input of a given email address associated with a given name; wherein the first address storage unit is configured to store the given email associated with the given name; and the second address storage unit is configured to store the first email address when the first email address associated with the given name is previously stored in the first address storage unit.

### BRIEF DESCRIPTION OF THE DRAWINGS

Embodiment may be described in detail with reference to the accompanying drawings, in which:
Fig. 1A is an exemplary front view illustrating an open state of a mobile phone according to a first and a second embodiments of the invention;
Fig. 1B is an exemplary side view illustrating the open state of the mobile phone according to the first and the second embodiments;
Fig. 2A is an exemplary front view illustrating a close state of the mobile phone according to the first and the second embodiments ;
Fig. 2B is an exemplary side view illustrating the close state of the mobile phone according to the first and the second embodiments;
Fig. 3 is an exemplary functional block diagram illustrating a mobile phone according to the first embodiment;
Fig. 4 is an exemplary data configuration diagram illustrating address book information according to the first embodiment;
Fig. 5 is an exemplary flowchart illustrating a procedure of performing an address book updating process in the mobile phone according to the first embodiment;
Fig. 6 is an exemplary data configuration diagram illustrating address book information according to the first embodiment;
Fig. 7 is an exemplary flowchart illustrating a procedure of performing an address book managing process in the mobile phone according to the first embodiment;
Fig. 8 is an exemplary diagram illustrating a display screen of a mail box in the mobile phone according to the first embodiment;
Fig. 9 is an exemplary diagram illustrating a display screen of an address book in the mobile phone according to the first embodiment;
Fig. 10 is an exemplary functional block diagram illustrating a mobile phone according to the second embodiment;
Fig. 11A is an exemplary data configuration diagram illustrating address book information according to the second embodiment;
Fig. 11B is an exemplary data configuration diagram illustrating updated-address book information according to the second embodiment;
Fig. 12 is an exemplary flowchart illustrating a procedure of performing an address book updating process in the mobile phone according to the second embodiment;
Fig. 13A is an exemplary data configuration diagram illustrating address book information according to the second embodiment;
Fig. 13B is an exemplary data configuration diagram illustrating updated-address book information according to the second embodiment; and
Fig. 14 is an exemplary flowchart illustrating a procedure of performing an address book managing process in the mobile phone according to the second embodiment.

### DETAILED DESCRIPTION OF THE EMBODIMENTS

### (First Embodiment)

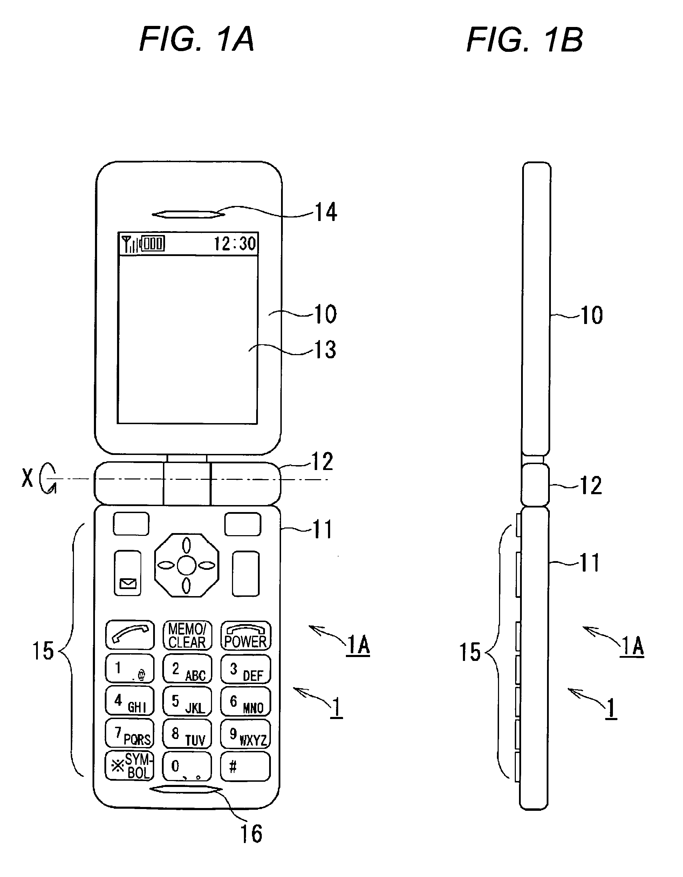

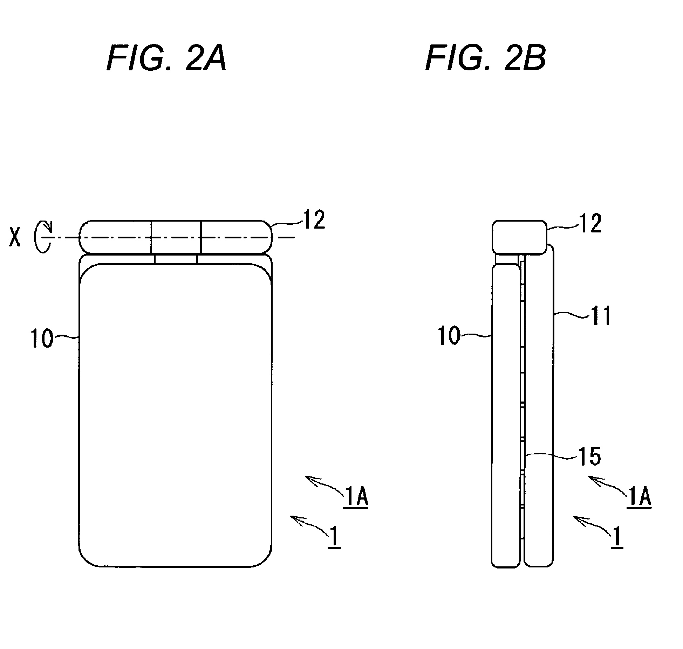

A first embodiment of a mobile apparatus according to the invention will be described with reference to Fig. 1A to Fig. 9. As the mobile apparatus according to the first embodiment, a clamshell mobile phone 1 will be described by way of example. Fig. 1A is a front view illustrating an open state of the mobile phone 1, and Fig. 1B is a side view illustrating the open state of the mobile phone 1. Fig. 2A is a front view illustrating a close state of the mobile phone 1, and Fig. 2B is a side view illustrating the close state of the mobile phone 1.

As shown in Fig. 1A to Fig. 2B, the mobile phone 1 is formed of a rectangular plate-shaped upper casing 10 and a lower casing 11 having substantially the same shape as the upper casing 10 so that front faces thereof are covered with each other. The upper casing 10 and the lower casing 11 are hinge-coupled through a hinge portion 12, and the upper casing 10 is formed to freely swing around the hinge portion 12 in a direction indicated by an arrow X shown in Fig. 1A by a predetermined degree with respect to the lower casing 11. The mobile phone 1 is changed from the close state to the open state or from the open state to the close state by rotating the upper casing 10 with respect to the lower casing 11.

A display 13 for displaying input characters or images, a address book, a transmitted or receivedmail, etc. and a speaker for outputting sound are provided on an inner face (facing to the lower casing 11) of the upper casing 10. When the mobile phone 1 is in the close state, the display 13 and the speaker 14 are not exposed to the outside since they are covered with the lower casing 11. However, when the mobile phone 1 is changed to the open state by rotating the upper casing 10 with respect to the lower casing 11, the display 13 and the speaker 14 are exposed to the outside.

For example, operation keys 15 such as a cross key for moving a cursor up, down, left, and right, numeral keys for inputting numerals, and a sending key for performing a sending process are provided on the inner face (facing to the upper casing 10) of the lower casing 11. The lower casing 11 is provided with a microphone 16 for collecting sound. When the mobile phone 1 is in the close state, the operation keys 15 and the microphone 16 are not exposed to the outside since they are covered with the upper casing 10. However, when the mobile phone 1 is changed to the open state by rotating the upper casing 10 with respect to the lower casing 11, the operation keys 15 and the microphone 16 are exposed to the outside.

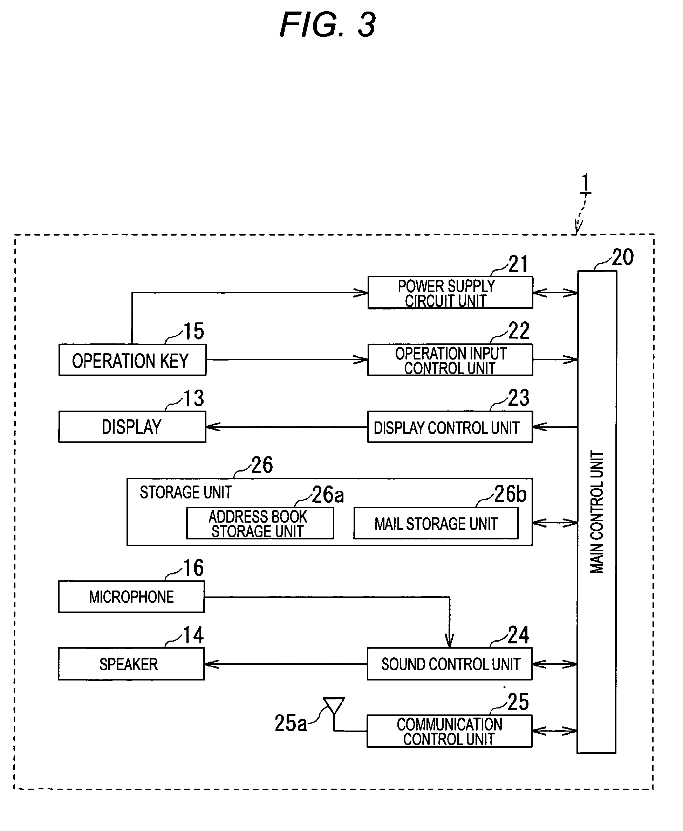

Functions of the mobile phone 1 will be described with reference to a functional block diagram shown in Fig. 3. As shown in Fig. 3, the mobile phone 1 includes a main control unit 20, a power supply circuit unit 21, an operation input control unit 22, a display control unit 23, a sound control unit 24, a communication control unit 25, and a storage unit 26, which are connected to each other by a bus.

The main control unit 20 having a Central Processing Unit (CPU) performs general controls of the mobile phone 1, an address management process, a mail display control process, and the other various operation processes and control processes. The power supply circuit unit 21 switches power ON/OFF based on user's input at the operation keys 15. In a power-ON state, the power supply circuit unit 21 supplies electric power from a power supply source (battery, etc.) to each unit, thereby operating the mobile phone 1.

The operation input control unit 22 has an input interface for the operation keys 15, and transmits signals input at the operation keys 15, to the main control unit 20. The display control unit 23 has an interface for the display 13, and displays document data or image data on the display 13 based on the control of the main control unit 20.

The sound control unit 24 generates an analog sound signal from sound collected by the microphone 16 based on the control of the main control unit 20, and converts the analog sound signal into a digital sound signal. When the sound control unit 24 receives a digital sound signal, the sound control unit 24 converts the digital sound signal into an analog sound signal and outputs the analog sound signal from the speaker 14, based on the control of the main control unit 20.

The communication control unit 25 performs spectrum despreading on a received signal received from a base station (not shown) through an antenna 25a to restore data based on the control of the main control unit 20. The data is transmitted to the sound control unit 24 and is output from the speaker 14, the data is transmitted to the display control unit 23 and is displayed on the display 13, or the data is stored in the storage unit 26, by the instruction of the main control unit 20. When the communication control unit 25 receives the sound data collected by the microphone 16, the data input at the operation keys 15, or the data stored in the storage unit 26, the communication control unit 25 performs spectrumdespreading on the data and transmits the data to the base station through the antenna 25a, based on the control of the main control unit 20.

The storage unit 26 includes a Read Only Memory (ROM) for the processes performed by the main control unit 20, a hard disk, a non-volatile memory, a database, a RandomAccess Memory (RAM) for temporarily storing data used for the processes performed by the main control unit 20, and the like. Programs for an address book updating process or a mail display control process performed by the main control unit 20 are stored, for example, in the ROM.

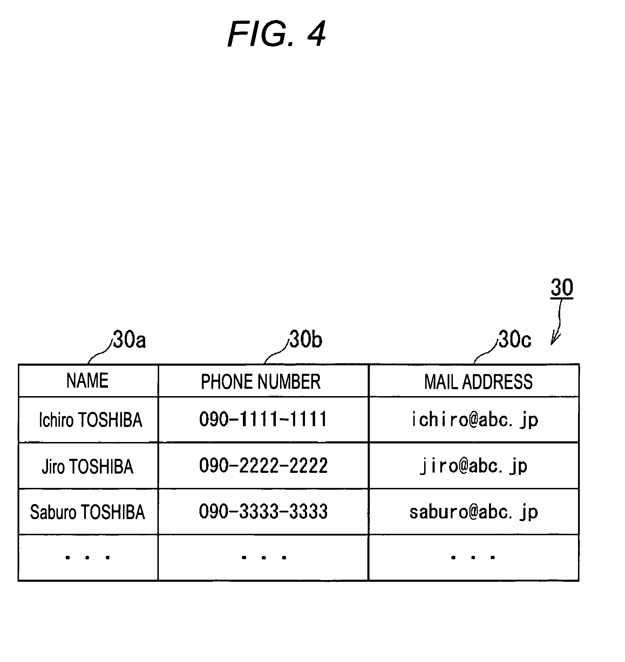

The storage unit 26 has an address storage unit 26a for storing address book information 30. In the address book information 30, phone numbers or mail addresses used when a user makes a phone call and transmits or receives a mail using the mobile phone 1 are stored corresponding to names. As shown in Fig. 4, in the address book information 30, at least name information 30a indicating names, phone number information 30b indicating phone numbers, and mail address information 30c indicating mail addresses correspond to each other.

For example, in the address book information 30 shown in Fig. 4, the phone number information 30b of "090-1111-1111" and the mail address information 30c of "ichiro@abc.jp" correspond to the name information 30a of "Ichiro TOSHIBA", and the phone number information 30b of "090-2222-2222" and the mail address information 30c of "jiro@abc.jp" correspond to the name information 30a of "Jiro TOSHIBA".

The storage unit 26 has a mail storage unit 26b for storing mail information transmitted and received by the mobile phone 1. The mail information includes transmission date and time, a transmission destination, a mail content, an attached file, and the like about the transmitted mail corresponding to each other. In addition, the mail information includes reception date and time, a transmission source, a mail content, an attached file, and the like about the received mail corresponding to each other.

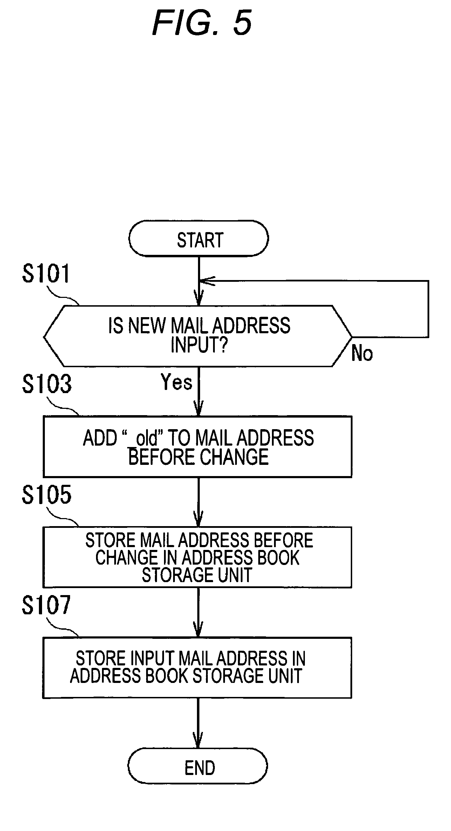

When the phone numbers or mail addresses stored as the address book information 30 need to be changed, the user inputs new information at the operation keys 15 to update the information. When the user inputs a new phone number or mail address, the mobile phone 1 performs an address book updating process for storing the input information in the address book storage unit 26a. A procedure of the address book updating process performed by the mobile phone 1 will be described with reference to a flowchart shown in Fig. 5. Hereinafter, a word of "Step" is omitted in description, for example, "Step S101" is represented by "S101".

When a user changes a phone number or a mail address stored as the address book information 30 using the mobile phone 1, the user inputs the information at the operation keys 15. Hereinafter, it is assumed that the user inputs a mail address by way of example. First, the main control unit 20 determines whether or not a user input a new mail address (S101). When a new mail address is not input (S101: No), the main control unit 20 does not perform the address book updating process and waits as it is.

When a new mail address was input (S101: Yes), the main control unit 20 stores a character string in which, for example, "_old" is added to an end of the mail address information 30c previously stored in the address book storage unit 26a, as the mail address information 30c (S103). The main control unit 20 stores the mail address including the "_old" added in Step S103, in the address book storage unit 26a (S105). In this embodiment, "_old" is exemplified as an additional identifier, however other character strings can be used as the additional identifier.

In Step S103, when there are a plurality of the previously stored mail address information 30c, the "_old" may be added after a screen for selecting an address to be added by "_old" from the previously stored mail addresses is displayed and a selecting operation is received, so that a mail address to be added by an identifier indicating an old address is selected.

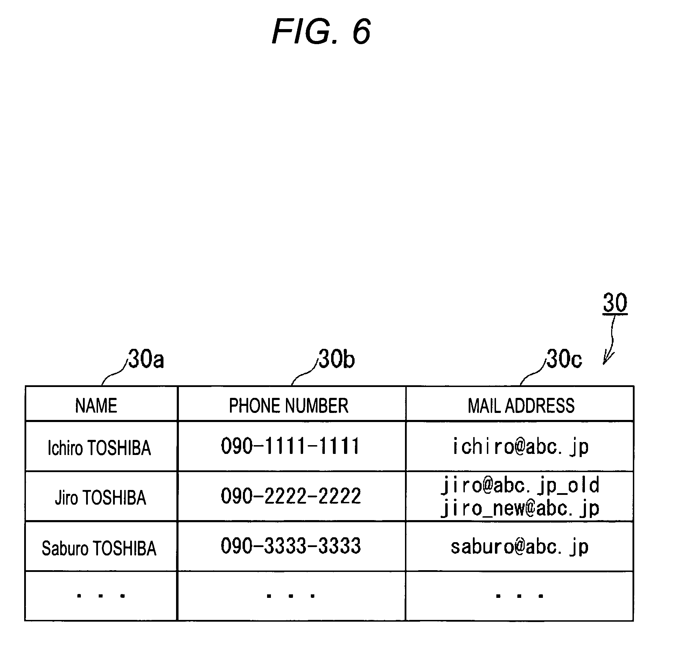

For example, in Step S101, when a user inputs "jiro_new@abc.jp" as a new mail address of "Jiro TOSHIBA", in the address book storage unit 26a, "jiro@abc.jp_old", which is formed by adding "_old" to the end of "jiro@abc.jp" that is the mail address information 30c corresponding to the name information 30a of "Jiro TOSHIBA", is stored corresponding to the name information 30a of "Jiro TOSHIBA" in the address book storage unit 26a, as the mail address information 30c, as shown in Fig. 6.

The main control unit 20 stores the new mail address corresponding to the name information 30a stored in Step S101 as the mail address information 30c, in the address book storage unit 26a (S107).

For example, In Step S101, the user inputs "jiro_new @abc.jp" as a new mail address of "Jiro TOSHIBA", in the address book storage unit 26a, the newly input "jiro_new@abc.jp" as the mail address information 30c corresponding to the name information 30a of "Jiro TOSHIBA" is stored corresponding to the name information 30a of "Jiro TOSHIBA" in the address book storage unit 26a, as the new mail address information 30c, as shown in Fig. 6.

As described above, when a phone number or mail address stored as the address book information 31 is rewritten, the mobile phone 1 stores a previous (before change) phone number or mail address added by an identifier such as "_old" in the address book storage unit 26a.

A method for adding the identifier such as "_old" to the mail address before change is not limited to the method shown in Fig. 5. For example, in the step of displaying the name information 30a of "Jiro TOSHIBA", when a menu is opened and an item of "set as an old address" is selected, "a control that the main control unit 20 stores what the mail address information 30c previously stored in the address book storage unit 26a added by, for example, "_old" to the end, as the mail address information 30c" may be performed in Step S103 shown in Fig. 5.

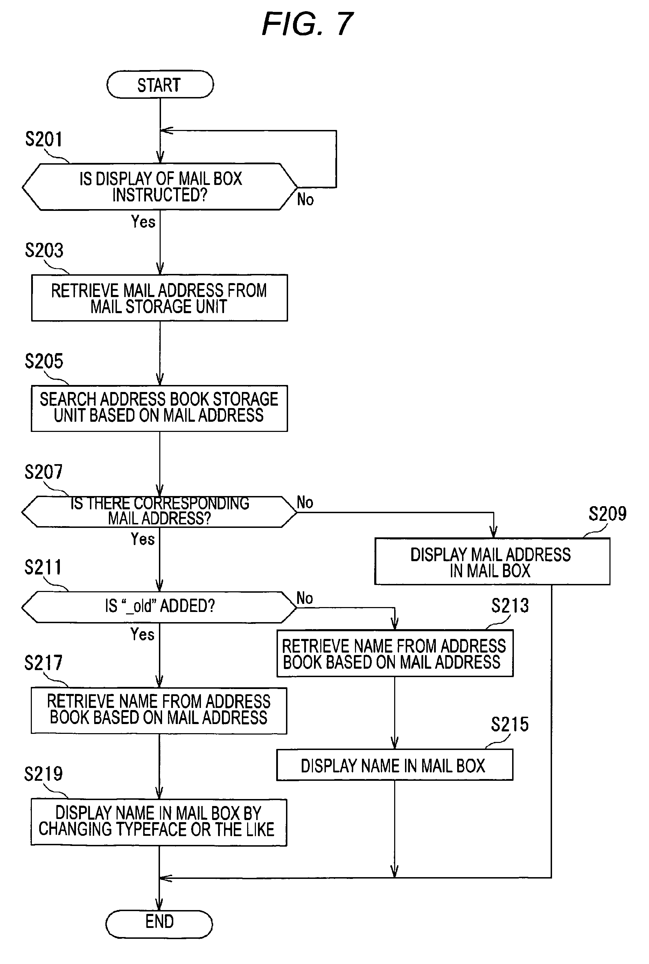

When the mobile phone 1 displays a mail box based on the mail information stored in the mail storage unit 26b, the mobile phone 1 performs a mail display control process for displaying information representing a mail content and a transmission source or transmission destination based on the address book information 30 stored in the address book storage unit 26a. A procedure of the mail display control process performed by the mobile phone 1 will be described with reference to a flowchart shown in Fig. 7.

To check a mail box, the user inputs an instruction to display the mail box at the operation keys 15. First, the main control unit 20 determines whether or not the displaying of the mail box was instructed by the user (S201). When the displaying of the mail box was not instructed (S201: No), the main control unit 20 does not display the mail box and waits as it is.

When the displaying of the mail box was instructed (S201: Yes), the main control unit 20 retrieves mail information from the mail storage unit 26b (S203). The main control unit 20 searches the address book storage unit 26a based on the mail address of the mail information retrieved in Step S203 (S205).

The main control unit 20 determines whether or not there is a mail address corresponding to the mail address included in the mail information in the address book storage unit 26a (S207). In this case, when "_old" is added to the mail address in the address book storage unit 26a, the correspondence is determined as the address not including "_old". When there is no corresponding mail address in the address book storage unit 26a (S207: No), the main control unit 20 displays the mail address as it is in the mail box since the mail address included in the mail information is not stored as the address book information 30 (S209).

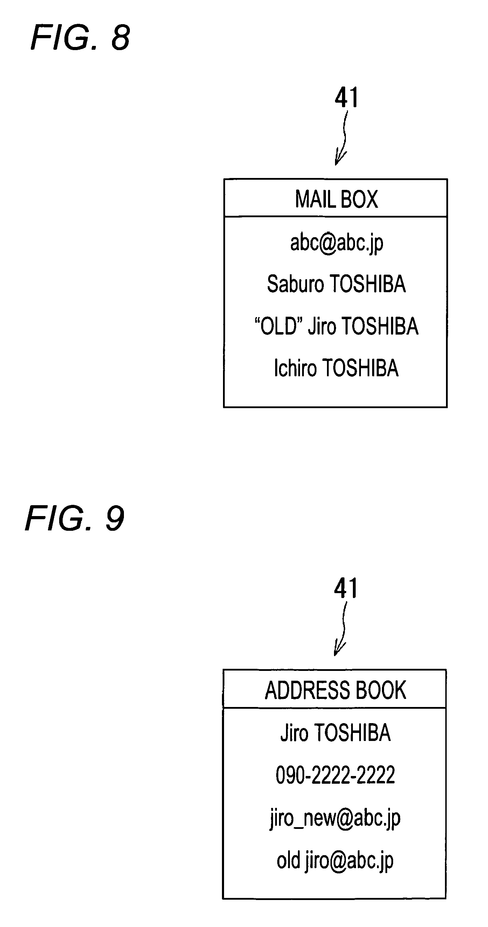

Shown in Fig. 8, for example, when the mail information includes a mail address of "abc@abc.jp", "abc@abc.jp" is displayed as it is in the mail box in Step S209 since the mail address is not stored in the address book storage unit 26a.

When there is a mail address corresponding to the mail address included in the mail information in the address book storage unit 26a (S207: Yes), the main control unit 20 determines whether or not "_old" is added to the corresponding mail address (S211) . That is, in the phone numbers or mail addresses stored in the address book storage unit 26a, when there was a rewritten phone number or mail address in Step S101 to S107, "_old" has been added to the end thereof.

When "_old" is not added thereto (S211: No), the main control unit 20 retrieves the name information 30a from the address book storage unit 26a based on the mail address included in the mail information since the mail address included in the mail information is stored in the address book storage unit 2 6a and is the present usedmail address (S213). Themaincontrol unit 20 displays the name retrieved in Step S213, as a transmission source or transmission destination of the mail box (S215).

As shown in Fig. 8, for example, when the mail information includes a mail address of "saburo@abc.jp", the mail information 30a is retrieved in Step S213 since the mail address corresponds to the name information 30a of "Saburo TOSHIBA" in the address book storage unit 26a. In Step S215, the name of "Saburo TOSHIBA" is displayed in the mail box.

When "_old" is added thereto (S211: Yes), the main control unit 20 retrieves the name information 30a from the address book storage unit 26a based on the mail address included in the mail information since the mail address included in the mail information was stored once in the address book storage unit 26a but has been rewritten (S217). The main control unit 20 displays the name retrieved in Step S213 as a transmission source or transmission destination of the mail box by changing a typeface thereof or the like (S219).

As shown in Fig. 8, for example, when the mail information includes a mail address of "ichiro@abc.jp", the name information 30a is retrieved in Step S217 since the mail address having "_old" added thereto corresponds to the name information 30a of "Ichiro TOSHIBA" in the address book storage unit 26a. In Step S219, for example "OLD" is added to the name of the "Saburo TOSHIBA" and the name is displayed in italics.

As described above, when the phone number or mail address stored as the address book information 30 are rewritten, the mobile phone 1 adds the identifier to the previous phone number or mail address and stores them. Accordingly, in the mail box, even an unusable old mail address can be displayed in a form of a name. In this case, the name may be displayed by changing a color or adding a symbol to its top so that the user can recognize that the mail address represented by the name is the old mail address.

For example, even when the old mail address of "Jiro TOSHIBA" is deleted from the address book information 30, the user can see the name of "Jiro TOSHIBA" in the mail box. "OLD", a symbol, a picture, or the like may be added in a vicinity of the name, or a displayed color or typeface thereof may be changed so that the user can recognize the mail address as the old mail address.

When the user updates the address book of the mobile phone 1 by changing mail addresses of user' s acquaintance, a new mail address may be added to the address book with the original mail address left as it is. Even in this method, when the past history of transmission/reception mails is displayed, it is possible to display a name corresponding to the oldmail address. However, in this method, the old mail address that cannot be used any longer remains in the address book. Accordingly, when the user tries to send a mail actually, the user cannot distinguish a usable mail address from the mail addresses. In contrast, in the embodiment, an identifier ("_old", etc.) is added to the old mail address, and thus the user can distinguish the old mail address.

As the first embodiment, the procedure of displaying the mail box has been described, but the invention is not limited thereto. Even in the case of displaying the address book, the rewritten old phone number or mail address (phone number or mail address having "_old" added thereto) is displayed by adding an identifier or by changing a typeface. As shown in Fig. 9, for example, "OLD" is added in the vicinity of "jiro@abc.jp" that is the old mail address having "_old" added thereto in the address book information 30, and then the address book is displayed.

According to the first embodiment, even when the phone number or mail address is rewritten in the address book, the user can distinguish a transmission source or transmission destination of the past transmission/reception mail by storing the phone number or mail address before change with the identifier added thereto.

### (Second Embodiment)

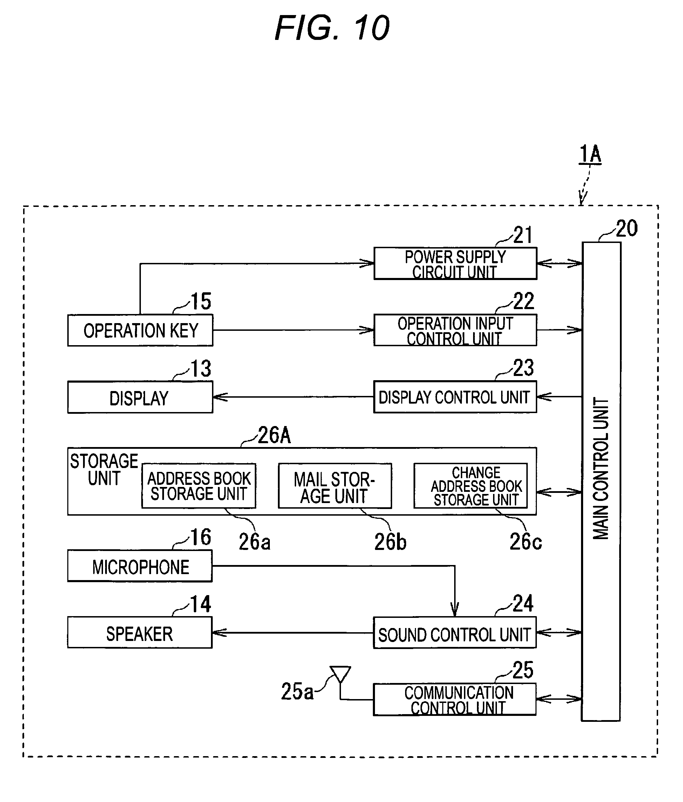

A second embodiment of the mobile apparatus according to the invention will be described with reference to Fig. 10 to Fig. 14. The same reference numerals and signs are given to the same configurations as the first embodiment, and the repeated description is omitted. As shown in Fig. 1A to Fig. 2B, a mobile phone 1A according to the second embodiment has the same configuration as the mobile phone 1 according to the first embodiment. Similarly with the mobile phone 1, as shown in Fig. 3, the mobile phone 1A according to the second embodiment includes the main control unit 20, the power supply circuit unit 21, the operation input control unit 22, the display control unit 23, the sound control unit 24, the communication control unit 25, and a storage unit 26A, which are connected to communicate with each other.

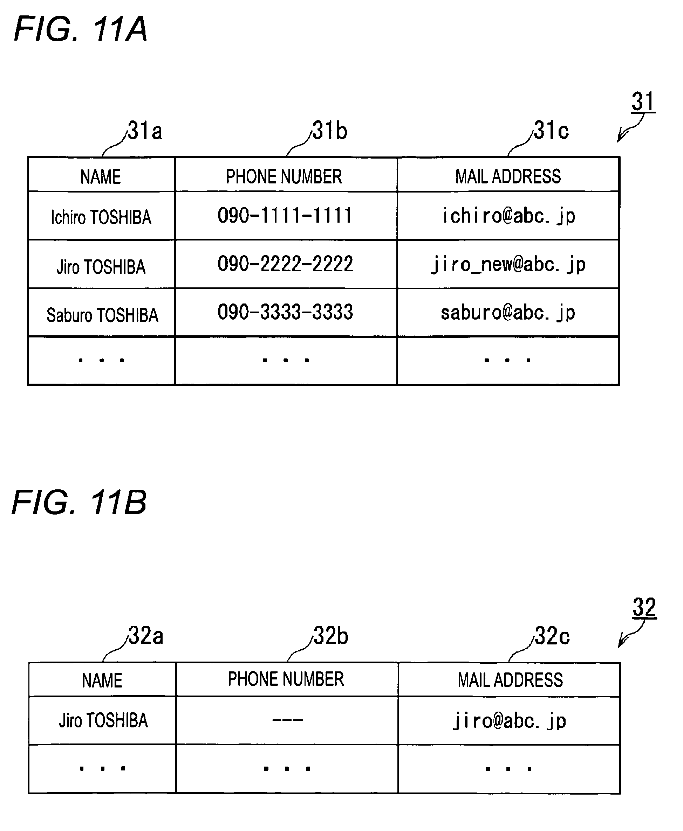

The storage unit 26A has an address book storage unit 26a for storing address book information 31. In the address book information 31, phone numbers or mail addresses used when a user makes a phone call and transmits or receives a mail using the mobile phone 1 are stored corresponding to names. As shown in Fig. 11A, in the address book information 31, at least name information 31a indicating names, phone number information 31b indicating phone numbers, and mail address information 31c indicating mail addresses correspond to each other.

For example, in the address book information 31 shown in Fig. 11A, the phone number information 31b of "090-1111-1111" and the mail address information 31c of "ichiro@abc.jp" correspond to the name information 31a of "Ichiro TOSHIBA", and the phone number information 31b of "090-2222-2222" and the mail address information 31c of "jiro_new@abc.jp" correspond to the name information 31a of "Jiro TOSHIBA".

The storage unit 26Ahas a mail storage unit 26b for storing mail information transmitted and received by the mobile phone 1A. The mail information includes transmission date and time, a transmission destination, a mail content, an attached file, and the like about the transmitted mail corresponding to each other. In addition, the mail information includes reception date and time, a transmission source, a mail content, an attached file, and the like about the received mail corresponding to each other.

The storage unit 26A has a change address book storage unit 26c for storing change address book information 32. In the change address book information 32, the phone numbers or mail addresses before change are stored corresponding to names, with respect to the changed phone number or mail address in the address book information 31. As shown in Fig. 11B, in the change address book information 32, at least name information 32a indicating names, phone number information 32b indicating phone numbers, and mail address information 32c indicating mail addresses correspond to each other.

For example, in the change address book information 32 shown in Fig. 11B, the mail address information 32c of "jiro@abc.jp" corresponds to the name information 32a of "Jiro TOSHIBA". This indicates that the mail address "jiro@abc.jp" of "Jiro TOSHIBA" stored in the address book information 32 has been already changed to a new mail address.

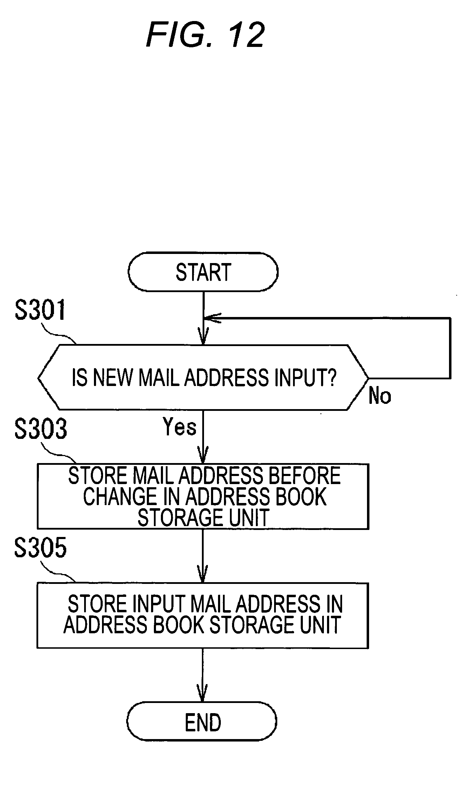

When the phone numbers or mail addresses stored as the address book information 31 needs to be changed, the user inputs new information at the operation keys 15 to update the information. When the user inputs a new phone number or mail address, the mobile phone 1A performs an address book updating process for storing the input information in the address book storage unit 26a. A procedure of the address book updating process performed by the mobile phone 1A will be described with reference to a flowchart shown in Fig. 12.

When a user changes a phone number or mail address stored as the address book information 31 using the mobile phone 1A, the user inputs the new phone number or mail address at the operation keys 15. Hereinafter, it is assumed that the user inputs a new mail address by way of example. First, the main control unit 20 determines whether or not a user input a new mail address (S301). When a new mail address was not input (S301: No), the main control unit 20 does not perform the address book updating process and waits as it is.

When a new mail address Was input (S301: Yes), the main control unit 20 stores the mail address information 31c before change previously stored in the address book storage unit 26a, corresponding to the name information 31a corresponding to the mail address information 31c, as the change address book information 32 in the change address book storage unit 26c (S303) The main control unit 20 the mail information input in Step S301 as the mail address information 31c, corresponding to the name information 31a, in the address book storage unit 26a (S305).

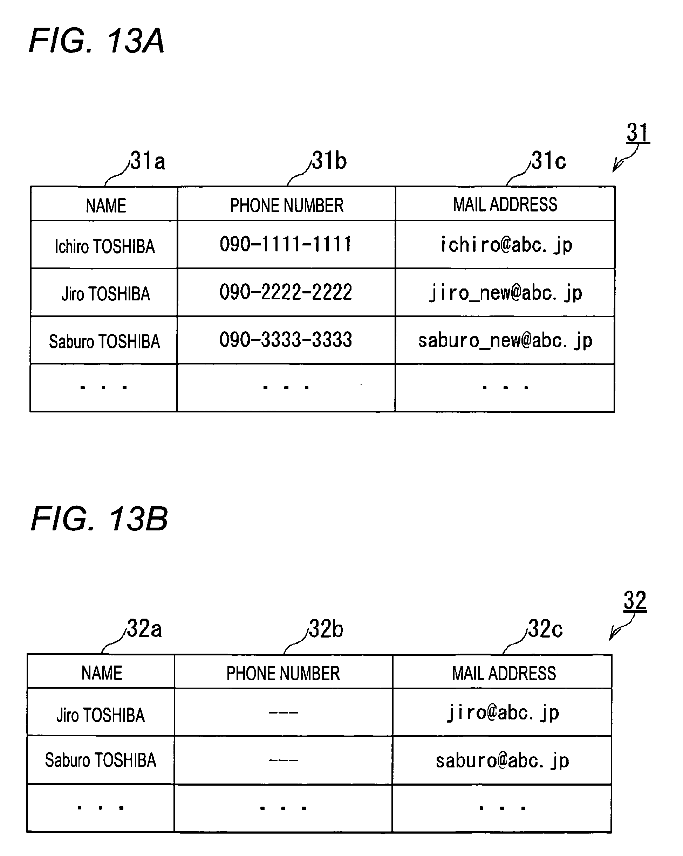

For example, in Step S301, when a user inputs a new mail address "saburo_new@abc.jp" for "Saburo TOSHIBA", "saburo_new@abc.jp" that is the newly input mail address corresponds to the name information 31a of "Saburo TOSHIBA", as the mail address information 31c in the address book information 31, as shown in Fig. 13A. As shown in Fig. 13B, in the change address book information 32, "saburo@abc.jp" that is the mail address before change corresponds to the name information 32a of "Saburo TOSHIBA", as the mail address information 31c.

As described above, when the phone number or mail address stored as the address book information 31 is rewritten, the mobile phone 1A stores the phone number or mail address before change corresponding to the name in the change address book storage unit 26c that is a dedicated database.

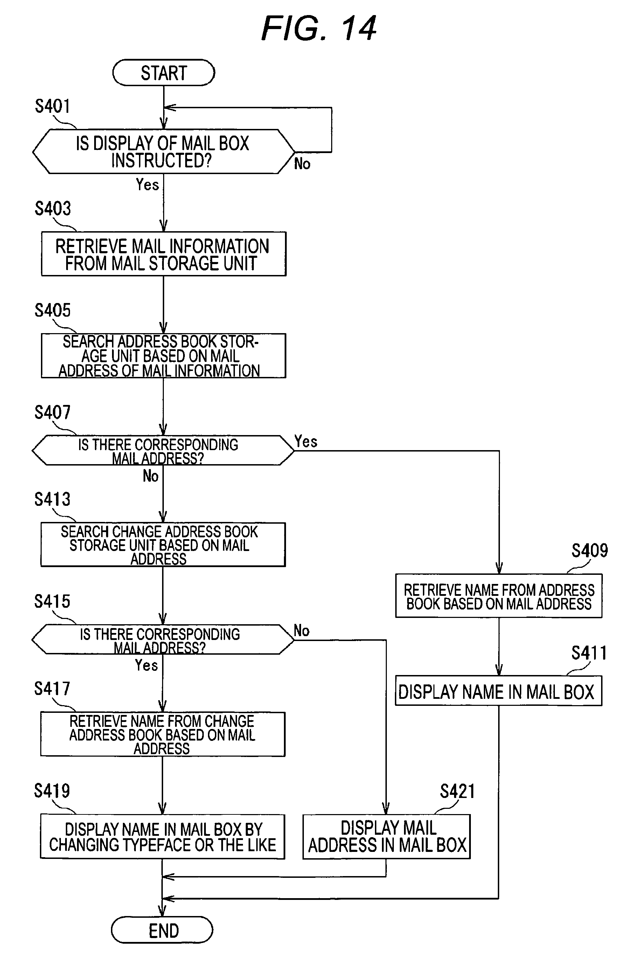

The mobile phone 1A displays a mail box based on the mail information stored in the mail storage unit 26b, the mobile phone 1A performs a mail display control process for displaying information representing a mail content and a transmission source or transmission destination based on the address book information 31 or the change address book information 32 stored in the address book storage unit 26a. A procedure of the mail display control process performed by the mobile phone 1A will be described with reference to a flowchart shown in Fig. 14.

To check a mail box, a user inputs an instruction to display the mail box at the operation keys 15. First, the main control unit 20 determines whether or not the displaying of the mail box is instructed by the user (S401). When the displaying of the mail box is not instructed (S401: No), the main control unit 20 does not display the mail box and waits as it is.

When the displaying of the mail box is instructed (S401: Yes), the main control unit 20 retrieves mail information from the mail storage unit 26b (S403). The main control unit 20 searches the address book storage unit 26a based on the mail address of the mail information retrieved in Step S403 (S405) .

The main control unit 20 determines whether or not there is a mail address corresponding to the mail address included in the mail information in the address book storage unit 26a (S407). When there is a mail address corresponding to the mail address included in the mail information in the address book storage unit 26a (S407: Yes), the main control unit 20 retrieves the name information 31a from the address book storage unit 26a based on the mail address included in the mail information since the mail address included in the mail information is stored in the address book storage unit 26a and is the present used mail address (S409). The main control unit 20 displays the name retrieved in Step S409, as a transmission source or transmission destination of the mail box (S411).

As shown in Fig. 8, for example, when the mail information includes a mail address of "ichiro@abc.jp", the name information 30a is retrieved in Step S409 since the mail address corresponds to the name information 31a of "Ichiro TOSHIBA" in the address book storage unit 26a. In Step S411, the name of "Ichiro TOSHIBA" is displayed in the mail box.

When there is no corresponding mail address in the address book storage unit 26a (S407: No), the main control unit 20 searches the change address storage unit 26c based on the mail address included in the mail information since the mail address included in the mail information was stored once in the address book storage unit 26a but may have been rewritten (S413).

The main control unit 20 determines whether or not there is a mail address corresponding to the mail address included in the mail information in the change address book storage unit 26c (S415). When there is a mail address corresponding to the mail address included in the mail information in the change address book storage unit 26c (S415: Yes), the main control unit 20 retrieves the name information 32a corresponding to the mail address included in the mail information from the change address book storage unit 26c (S417). The main control unit 20 displays the name retrieved in Step S417 as a transmission source or transmission destination of the mail box by changing the typeface thereof or the like (S419).

As shown in Fig. 8, for example, when the mail information includes a mail address of "jiro@abc.jp", the name information 32a is retrieved in Step S417 since the mail address corresponds to the name information 32a of "Jiro TOSHIBA" in the change address book storage unit 26c. In Step S419, for example "OLD" is added to the name of the "Jiro TOSHIBA" and the name is displayed in italics.

When there is no mail address corresponding to the mail address included in the mail information in the change address book storage unit 26c (S415: No), the main control unit 20 displays the mail address as it is in the mail box since the mail address included in the mail information is not stored as the address book information 31 or the change address book information 32 (S421).

Shown in Fig. 8, for example, when the mail information includes a mail address of "abc@abc.jp", "abc@abc.jp" is displayed as it is in the mail box in Step S421 since the mail address is not stored in the address book storage unit 26a.

As described above, in the mobile phone 1A, when the phone number or mail address stored as the address book information 31 are rewritten, the phone number or mail address before change are stored corresponding to the name in the change address book storage unit 26c that is a dedicated database. Accordingly, even when the mail address displayed in the mail box was deleted from the address book information 31, the mail address is changed to the name to be displayed in the mail box. In this case, the name may be displayed by changing a color or adding a symbol so that the user can recognize the old mail address.

As the second embodiment, the procedure of displaying the mail box has been described, but the invention is not limited thereto. Even in the case of displaying the address book, the rewritten old phone number or mail address (phone number or mail address stored in the change address book information 32) is displayed by adding an identifier or changing a typeface. As shown in Fig. 9, for example, "OLD" is added in the vicinity of "jiro@abc.jp" that is the old mail address stored in the change address book information 32, and then the address book is displayed.

According to the second embodiment, even when the phone number or mail address is rewritten in the address book, the user can distinguish a transmission source or transmission destination of the past transmission/reception mail by storing the phone number or mail address before change in the dedicated database. Generally, in the method of adding the identifier of "_old" as described in the first embodiment, it is not necessary to prepare a new database 555, and the method can be applied to the system of the known address book. Accordingly, even when the address book is transmitted to the other mobile phone or personal computer, the oldmail address can be also transmitted. Thus, a user can know that the mail address is the old mail address by checking the mail address. Therefore, the mobile phone according to the invention is very compatible with the other mobile phone or personal computer not having any function according to the invention.

There are may users who frequently change mail addresses of mobile phones, and there are many mail addresses by which a user cannot be identified. Even in such a case, a history of mail transmission and reception can be displayed using the names or the like stored in the address book. Accordingly, it is very advantageous that the user can immediately distinguish who is the transmission/reception mail received from or who is the transmission/reception mail transmitted to.

In the invention, the mobile phones 1 and 1A have been described, but the invention is not limited thereto and may be applied to any communication terminals such as a Personal Handyphone System (PHS) andaPersonalDigitalAssistance (PDA) .

## Claims

1. A mobile apparatus comprising:
a mail storage unit configured to store a history of email communications;
an address storage unit configured to store a first email address associated with a certain name and a second email address associated with the certain name and an additional identifier; and
a display unit configured to display the certain name in a first manner to represent the first email address in the history;
wherein the display unit is configured to display the certain name in a second manner to represent the second email address in the history.

2. The mobile apparatus of Claim 1, further comprising an input unit configured to receive an input of a given email address associated with a given name;
wherein the address storage unit is configured to generate and store a character string by adding the additional identifier to the second email address when the input unit receives the first email address and the second email address is previously stored in the address storage unit.

3. A mobile apparatus comprising:
an address storage unit configured to store a first party information associated with a certain name; and
a display unit configured to display the first party information in a first manner;
wherein the address storage unit is configured to generate and store a second party information by adding an additional identifier to the first party information; and
the display unit is configured to display the first party information in a second manner when the address storage unit stores the second party information.

4. The mobile apparatus of Claim 3, wherein the first party information includes a phone number.

5. The mobile apparatus of Claim 3, wherein the first party information includes an email address.

6. The mobile apparatus of Claim 3, further comprising an input unit configured to receive an input of a given party information associated with a given name;
wherein the address storage unit is configured to generate and store the second party information by adding the additional identifier to the first party information when the input unit receives another party information associated with the certain name and the first party information associated with the certain name is previously stored in the address storage unit.

7. A mobile apparatus comprising:
a mail storage unit configured to store a history of email communications;
a first address storage unit configured to store a first email address and a first corresponding name;
a second address storage unit configured to store a second email address and a second corresponding name; and
a display unit configured to display the first corresponding name in a first manner to represent an email address included in the history when the email address corresponds to the first email address;
wherein the display unit is configured to display the second corresponding name in a second manner to represent the email address when the email address corresponds to the second email address.

8. The mobile apparatus of Claim 7, further comprising an input unit configured to receive an input of a given email address associated with a given name;
wherein the first address storage unit is configured to store the given email associated with the given name; and
the second address storage unit is configured to store the first email address when the first email address associated with the given name is previously stored in the first address storage unit.
